# EUROPÄISCHE PATENTANMELDUNG

(11) **EP 2 127 791 A1**
(43) Veröffentlichungstag der Anmeldung: **02.12.2009**
(21) Anmeldenummer: 09006773.7
(22) Anmeldetag: 20.05.2009
(51) Int. Cl.: B23B 51/10

(54) **Entgratwerkzeug zum Entgraten von Bohrungen**

(30) Priorität: 28.05.2008 DE 102008025642
(71) Anmelder: Heule, Ulf, 9436 Balgach (CH)
(72) Erfinder: Heule, Heinrich, 9434 Au SG (CH); Stunder, Harry, 9436 Balgach (CH); Brown, Gary, Loveland OH 45140 (US)
(74) Vertreter: Riebling, Peter

(57) **Zusammenfassung**

Die Erfindung betrifft ein Entgratwerkzeug zum Entgraten von Bohrungen, insbesondere von Einfachbohrungen oder Durchgangsbohrungen, beinhaltend einen Werkzeughalter (1) mit Werkzeugschaft (2) und Vorderteil (3), in dem eine in Querrichtung zur Längsrichtung des Werkzeughalters (1) sich erstreckende Ausnehmung (19) vorhanden ist, in der mindestens ein Schneidmesser (14, 15) vorhanden ist, an deren Unterseite eine Rastausnehmung (26) vorgesehen ist, in welche eine Wippen-Messer-Kupplung (17, 18) eingreift, welcher drehfest mit der Vorderseite einer drehbar im Werkzeugschaft (2) angeordneten Wippe (7) verbunden ist, welche mit einer Feder (6) vorgespannt ist, wodurch das mindestens eine Schneidmesser (14, 15) stets in einer ausgefahrenen Position federbelastet am Werkzeugschaft (2) gehalten wird, **dadurch gekennzeichnet, dass** die Wippen-Messer-Kupplung (17, 18), in Form eines starren Wippenbolzens oder einer elastischen Wippenfeder, in Längsrichtung des Werkzeughalters (1) federbelastet in die zugeordnete Rastausnehmung (26) am Grund des mindestens einen Schneidmessers (14, 15) eingreift. Aufgabe ist es, unter Beibehaltung der Vorteile eines bekannten Entgratwerkzeuges, den Messerwechsel vereinfacht zu gestalten, insbesondere soll er ohne Werkzeug geschehen können und ohne dass ein Eingriff an der Wippe selbst notwendig ist.

## Beschreibung

Die Erfindung betrifft ein Entgratwerkzeug zum Entgraten von Bohrungen, insbesondere von Einfachbohrungen oder Durchgangsbohrungen.

Mit einer auf den gleichen Anmelder zurückgehenden Ausführung, die dort GHS genannt wird, ist ein Entgratwerkzeug bekannt, welches etwa zylinderförmig ausgebildet ist und einen zylinderförmigen Werkzeughalter beschreibt, an dessen vorderem Ende ein Werkzeugschaft angeordnet ist, in dessen Vorderteil eine in Querrichtung zur Längsrichtung des Werkzeughalters sich erstreckende Ausnehmung vorhanden ist, in der zwei gegeneinandergestellte Schneidmesser vorhanden sind.

Hierbei ist es bekannt, an der Unterseite jeden Schneidmessers eine entsprechende Aufnahmebohrung vorzusehen, in welche jeweils ein Bolzen eingreift. Jeder Bolzen ist drehfest mit der Vorderseite einer drehbar im Werkzeugschaft angeordneten Wippe verbunden. Die Wippe ist mit einer Torsionsfeder vorgespannt. Aufgrund der Vorspannung der Torsionsfeder hatte die Wippe die beiden Schneidmesser stets in einer ausgefahrenen Position federbelastet am Werkzeugschaft gehalten.

Wenn nun zum Zweck des Entgratens die ausgefahrenen Messer in eine entsprechende Durchgangsbohrung eingefahren werden, so erfolgt ein entsprechender Druck auf die beiden Schneidmesser bedingt durch die Vorspannung der Torsionsfeder, so dass diese federbelastet in den Werkzeugschaft hineingedrückt werden. Auf diese Weise findet die Entgrataktion statt.

Nachteil bei dem bekannten Entgratwerkzeug war jedoch, dass die Auswechslung der beiden entgegengesetzt gerichteten Schneidmesser schwierig war. Zum Zwecke des Auswechselns musste die gesamte Wippe mit Hilfe einer an der Unterseite der Wippe eingreifenden Exzenterschraube und deren Betätigung zurückgezogen werden, um die beiden Wippenbolzen außer Eingriff mit der zugeordneten Ausnehmung an der Unterseite des jeweiligen Schneidmessers zu bringen.

Problematisch war dann das erneute Einbauen eines neuen Schneidmessers, denn das neue Schneidmesser musste so eingeschoben werden, dass der zugeordnete Wippenbolzen passgenau in die Nut am Boden des Schneidmessers eingeführt wurde.

Demzufolge besteht beim Stand der Technik der Nachteil, dass bei einem Entgratwerkzeug, der Eingangs genannten Art, der Messerwechsel außerordentlich schwierig und problematisch ist.

Der Erfindung liegt deshalb die Aufgabe zugrunde unter Beibehaltung der Vorteile des bekannten Entgratwerkzeuges den Messerwechsel vereinfacht zu gestalten. Insbesondere soll er ohne Werkzeug geschehen können und ohne dass ein Eingriff an der Wippe selbst notwendig ist.

Zur Lösung der gestellten Aufgabe ist die Erfindung **dadurch gekennzeichnet, dass** die Wippenbolzen in Längsrichtung des Werkzeughalters federbelastet in eine zugeordnete Rastausnehmung am Grund des jeweiligen Schneidmessers eingreifen.

Mit der gegebenen technischen Lehre ergibt sich der wesentliche Vorteil, dass nun eine Rastausnehmung am Grund oder Boden des jeweiligen Schneidmessers angeordnet ist und dass der jeweilige Wippenbolzen federbelastet in diese Rastausnehmung eingreift, so dass ein einfaches Auswechseln des jeweiligen Schneidmessers möglich ist.

In einer ersten Ausführungsform wird das federbelastete Eingreifen der Wippenbolzen dergestalt ausgeführt, dass die beiden Wippenbolzen fest auf dem Führungsteil der Wippe angeordnet sind und die Wippe in sich federbelastet axial verschiebbar in dem Vorderteil des Werkzeughalters aufgenommen ist.

Auf diese Weise greifen beide Wippenbolzen synchron federbelastet in die jeweilige zugeordnete Rastausnehmung am Boden des Schneidmessers ein.

Zum Auswechseln eines Schneidmessers reicht es deshalb aus, das jeweilige Schneidmesser in Einfahrrichtung in den Werkzeugschaft noch weiter zu schieben oder mit einem entsprechenden Hilfswerkzeug zu schieben, so dass der federbelastete Bolzen in der Rastausnehmung auf eine entsprechende Keilfläche gerät, an der Keilfläche entlang gleitet (diese ist als Gleitfläche ausgebildet) und so außer Eingriff mit der Rastausnehmung des Messers kommt. Das Messer fällt zuzusagen dann bei entsprechendem Druck selbsttätig aus der Ausnehmung im Werkzeugschaft heraus, so dass ein sehr einfaches Auswechseln gegeben ist.

Bei der erst genannten Ausführungsform ist also wesentlich, dass die Wippe selbst in axialer Richtung federbelastet vorgespannt ist, so dass die beiden starren Wippenbolzen synchron federvorbelastet in die jeweilige Rastausnehmung am Grund des Schneidmessers eingreifen.

In einer zweiten Ausführungsform ist es vorgesehen, dass jeder Wippenbolzen für sich selbst genommen individuell federvorgespannt ist und in einer zugeordneten Ausnehmung im Führungsteil an der Vorderseite der Wippe axial verschiebbar gelagert ist.

In einer dritten Ausgestaltung kann es vorgesehen sein, dass statt starrer Wippenbolzen nun diese selbst durch eine entsprechende Druckfeder ersetzt sind. Jeder Wippenbolzen ist also durch eine entsprechende axiale federvorbelastete Druckfeder ersetzt.

Solche Federn können sehr einfach gebaut werden, indem man zwei Druckfedern ineinander wickelt, so dass das eine Ende der einen Druckfeder den einen Wippenbolzen und das andere Ende der Druckfeder den anderen Wippenbolzen bildet.

Statt axial federvorspannbarer Druckfedern können selbstverständlich auch andere Federn verwendet werden, wie z.B. Schenkelfedern, Spiralfedern oder Torsionsfedern.

Die Erfindung ist nicht darauf beschränkt, dass die Auswechslung von zwei gegeneinander gestellten Messern auf die besonders einfache Art gemäss der Erfindung erfolgt. Es reicht aus in einer abgewandelten Ausführungsform aus, ein einziges Schneidmesser zu verwenden, und ebenfalls die einfache Auswechslung mit einem federbelasteten Wippenbolzen vorzusehen.

Wichtig bei der Erfindung ist, dass bei der Verwendung von zwei Schneidmessern eine besonders günstige Synchronisierung der Messer stattfindet. Die beiden Messer liegen im Innenraum des Werkzeugschaftes aneinander an und bilden so aneinander entlanggleitende Führungsflächen, während sie an ihren Außenseiten jeweils in zugeordneten Führungsflächen im Bereich der Ausnehmung an der Vorderseite des Werkzeugschaftes anliegen. Damit erfolgt eine praktisch spielfreie querverlaufende Verschiebung der Messer, die sich gegenseitig abstützen. Wichtig ist, dass die Messer zwei diametral einander gegenüberliegende Schneiden bilden, wobei die Messer sich aufgrund des stabilen Eingriffes der Wippenbolzen stets gegenseitig ausrichten. Fährt beispielsweise die gesamte Anordnung in eine etwas unrunde Bohrung hinein, oder in eine schräge Bohrung, dann wird das eine Messer mit geringerem Druck an den Bohrungsrand angedrückt wie vergleichsweise das andere Messer. Dabei kommt es zu einer Stabilisierung der Messer dadurch, dass das eine Messer mit stärkerem Druck die Wippe zurückdreht, wodurch das andere Messer selbsttätig nach Außen gefahren wird, welches vorher keinen so großen Druck erfuhr. Aus diesem Grund synchronisiert das eine Messer das andere Messer, weil sie beide auf stabilen Wippenbolzen einer gemeinsamen Wippe gelagert sind, die sich nur insgesamt als Einzelteil drehen kann.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Längsschnitt durch eine erste Ausführungsform eines Entgratwerkzeuges
- Figur 2:: Die Wippe nach der Erfindung gemäss der ersten Ausführungsform
- Figur 3:: Eine gegenüber Figur 1 und 2 abgewandelte Ausführungsform mit einer nicht verstellbaren Wippe
- Figur 4:: Der Schnitt gemäss der Linie IV - IV in Figur 3
- Figur 5:: Der Schnitt gemäss der Linie V - V in Figur 4
- Figur 6:: Eine vergrößerte Detaildarstellung des Vorderteils des Entgratwerkzeuges mit ausgefahrenen Messern
- Figur 7:: Schematisiert ein Schneidmesser nach der Erfindung mit Eingriff eines Wippenbolzens
- Figur 8:: Die vergrößerte Vorderansicht des Entgratwerkzeuges mit der Verwendung eines einzigen Schneidmessers
- Figur 9:: Ein Schnitt durch die Ausführung nach Figur 8 bei der Verwendung eines einzigen Schneidmessers
- Figur 10 und Figur 11:: Schematisiert die Darstellung der gegenseitigen Synchronisierung der Verschiebungen der beiden gegeneinandergestellten Schneidmesser.

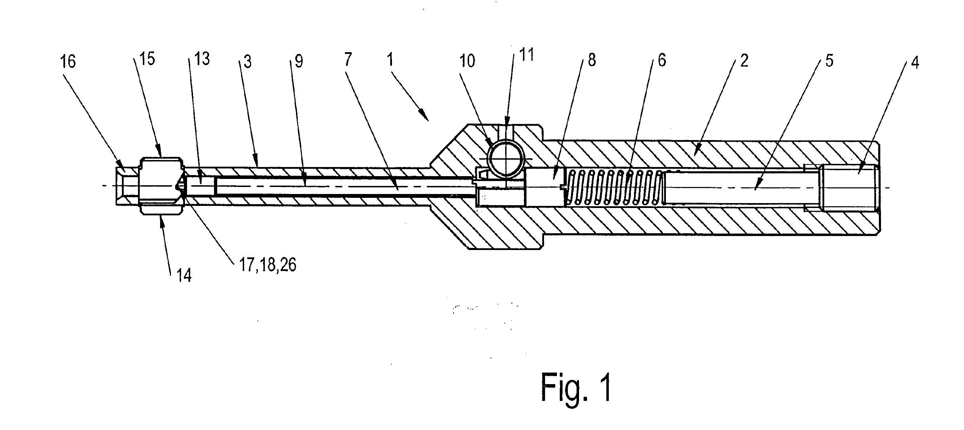

In Figur 1 ist ein Werkzeughalter 1 dargestellt, der aus einem zylinderförmigen Werkzeugschaft 2 besteht, an dessen Vorderteil ebenfalls ein zylinderförmiges Vorderteil 3 ansetzt.

Im Werkzeugschaft 2 ist eine Längsbohrung 4 angeordnet, in der ein Distanzbolzen 5 befestigt ist. An der Vorderseite des Distanzbolzens 5 liegt das eine Ende einer Druckfeder 6 an, die mit ihrem anderen Ende in einen Wippenschaft 8 eingreift und diesen Wippenschaft in einer bestimmten Drehrichtung federnd vorspannt.

Hierbei greifen die Enden der Druckfeder 6 in zugeordnete Nuten 12 am Wippenschaft 8 ein, um diesen drehend vorzuspannen.

Der Wippenschaft 8 setzt sich nach vorne durch ein kleiner dimensioniertes zylindrisches Vorderteil 9 fort, welches an seinem vorderen Ende wiederum in ein zylindrisches Führungsteil 13 übergeht, an dessen Stirnseite 2 eine gegenseitigen Abstand voneinander einnehmende Wippenbolzen 17, 18 angeordnet sind.

Die Figur 1 zeigt, dass eine Drehspindel 10 vorhanden ist, um eine bestimmte Drehung des Wippenschaftes 8 vor einzustellen, um so die beiden einander gegenübergestellten Schneidmesser 14, 15 mehr oder weniger in eine bestimmte Grundposition aus der Ausnehmung im Vorderteil 3 des Werkzeughalters 1 herauszufahren.

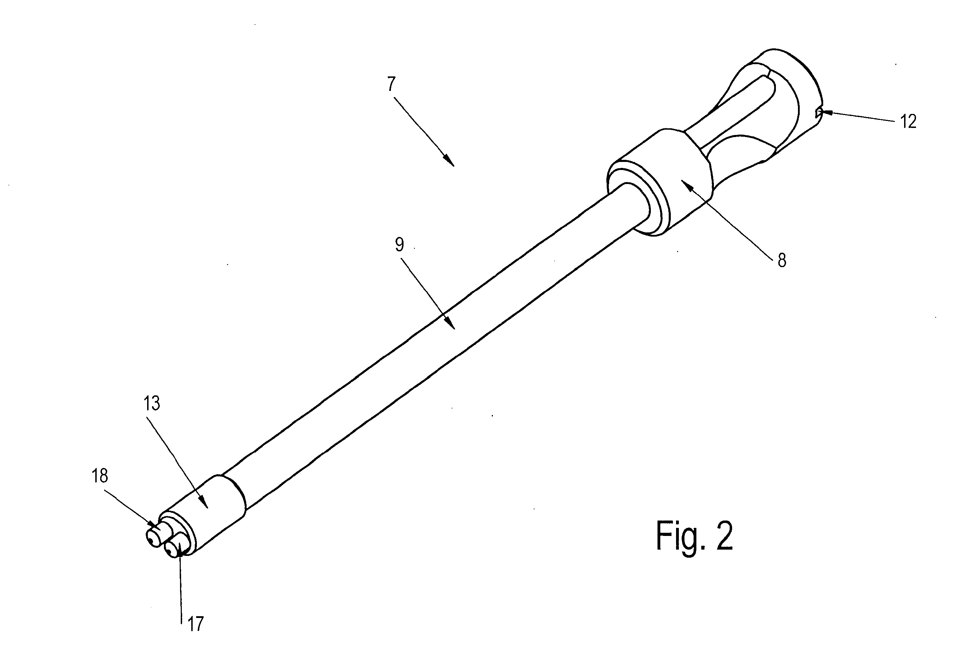

Deshalb zeigt der Wippenschaft 8 gemäss Figur 2 entsprechende Einfräsungen, um dort die Drehspindel 10 eingreifen zu lassen.

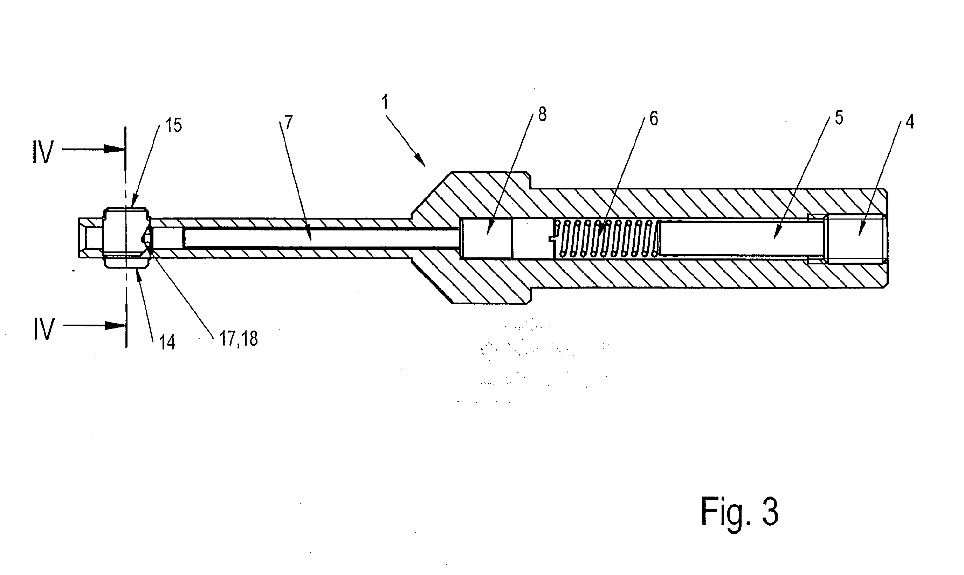

Die Figur 3 zeigt hingegen, dass der Verstellmechanismus mit der Drehspindel 10 auch entfallen kann. Im Übrigen ist aus Figur 1 noch erkennbar, dass die Verdrehung der Drehspindel 10 mit einer Feststellschraube 11 festgesetzt wird.

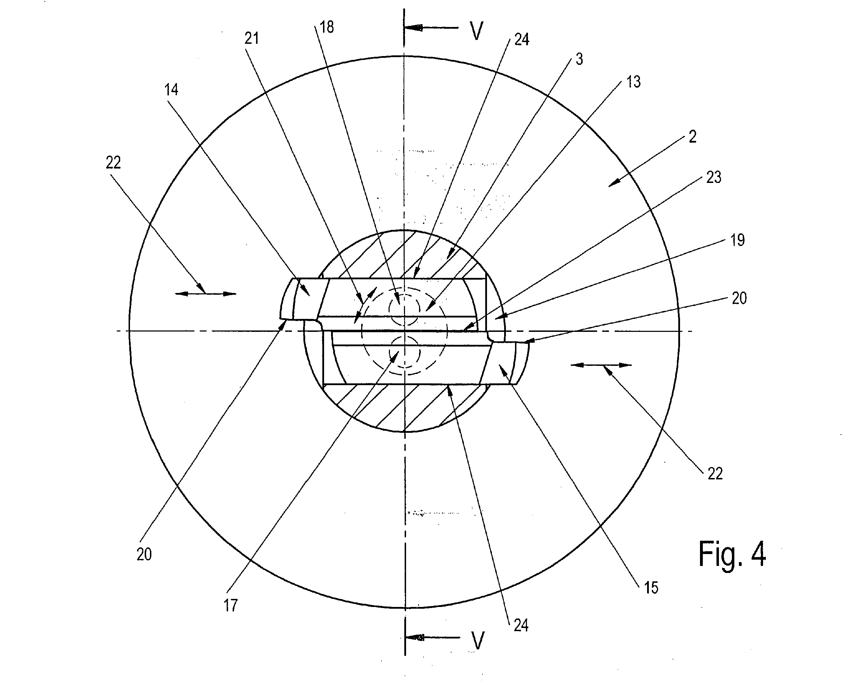

In Figur 4 ist erkennbar, dass die beiden Schneidmesser 14, 15 gegeneinander gestellt sind und eine absolut sichere spielfreie Führung in diametraler Richtung (in den Pfeilrichtungen 22) in der zugeordneten Ausnehmung 10 im Vorderteil 3 des Entgratwerkzeuges haben.

Hierzu bilden die beiden Schneidmesser 14, 15 eine gemeinsame Führungsfläche 23 aus, so dass sie in Kontakt miteinander aneinander entlang gleiten. Ferner liegt jedes Schneidmesser 14, 15 mit einer gegenüberliegenden, außenliegenden Führungsfläche 24 an der Innenseite der Wandung der Ausnehmung 19 im Vorderteil 3 des Entgratwerkzeuges an.

Es ist erkennbar, dass der eine Wippenbolzen 18 in eine zugeordnete Rastausnehmung 26 in das eine Schneidmesser 14 eingreift, während der andere Wippenbolzen 17 in eine gleiche Rastausnehmung 26 in dem anderen Schneidmesser 15 eingreift.

In Figur 1 ist erkennbar, dass die Ausnehmung 19 im Vorderteil 3 des Werkzeughalters 1 noch nach oben hin durch ein Kopfteil 16 abgeschlossen ist.

Auf diese Weise ist sichergestellt, dass auch die in Längsrichtung oben liegenden Stirnseiten der Schneidmesser 14, 15 an einen zugeordneten Führungsflächen im Kopfteil 16 längs verschiebbar geführt sind.

Wird nun beispielsweise die Wippe 7 in Drehrichtung 21 verstellt, und zwar entgegen der Kraft der Druckfeder 6, dann werden dementsprechend auch die Wippenbolzen 17, 18 in der eingezeichneten Drehrichtung 21 verstellt und die Schneidmesser 14, 15 werden in den Pfeilrichtungen 22 jeweils aus der Ausnehmung im Vorderteil 3 herausgefahren oder hereingefahren.

Jedes Schneidmesser 14, 15 weist hierbei zugeordnete Schneidkanten 20 auf.

Aus der Darstellung in Figur 4 ergibt sich, dass bei einem entsprechenden Zerspannungsdruck auf die Schneidkanten 20 die Messer 14, 15 sich gegenseitig abstützen und absolut spielfrei und synchron in der Ausnehmung 19 im Vorderteil dessen Gratwerkzeuges geführt sind.

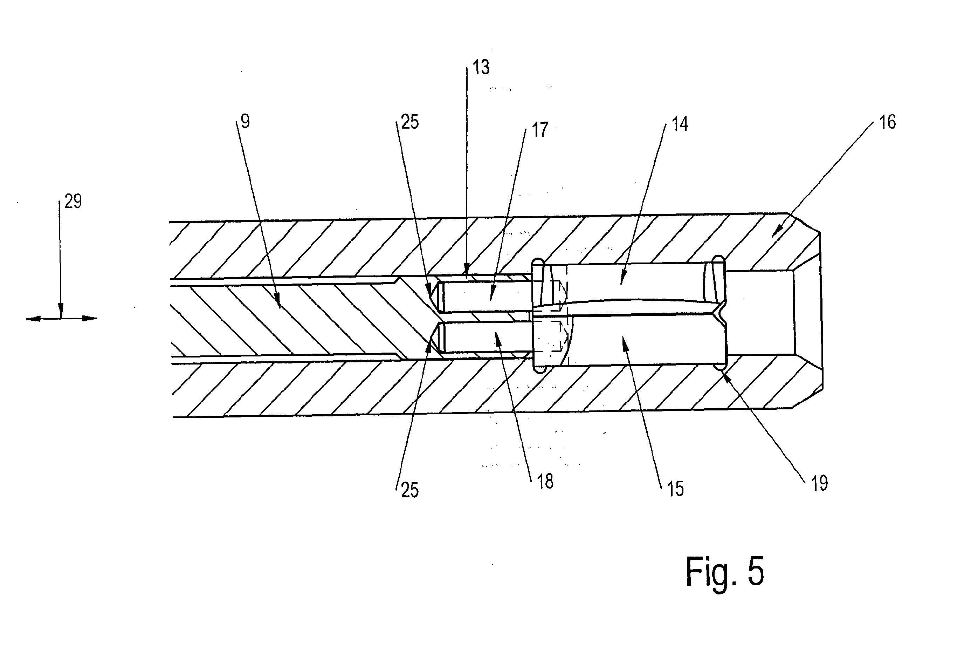

Die Figur 5 zeigt die Seitenansicht der Anordnung nach Figur 3 in vergrößerter Darstellung, wo erkennbar ist, dass die Wippenbolzen 17, 18 in zugeordneten Bohrungen 25 an der Stirnseite des Vorderteils 9 der Wippe 7 eingepresst sind.

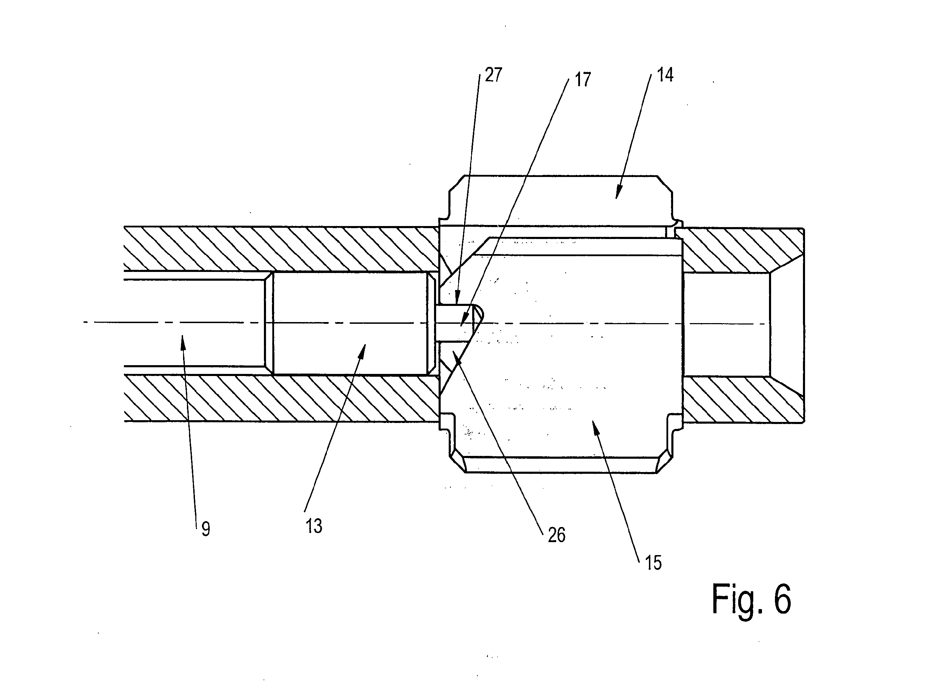

Die Figur 6 zeigt nun die leichte Auswechselbarkeit der Anordnung, wo erkennbar ist, das jeweils ein Wippenbolzen 17, 18 federbelastet (siehe Pfeilrichtung 29 in Figur 5) in eine zugeordnete Rastausnehmung 26 an der Bodenseite des Schneidmessers 14, 15 eingreift.

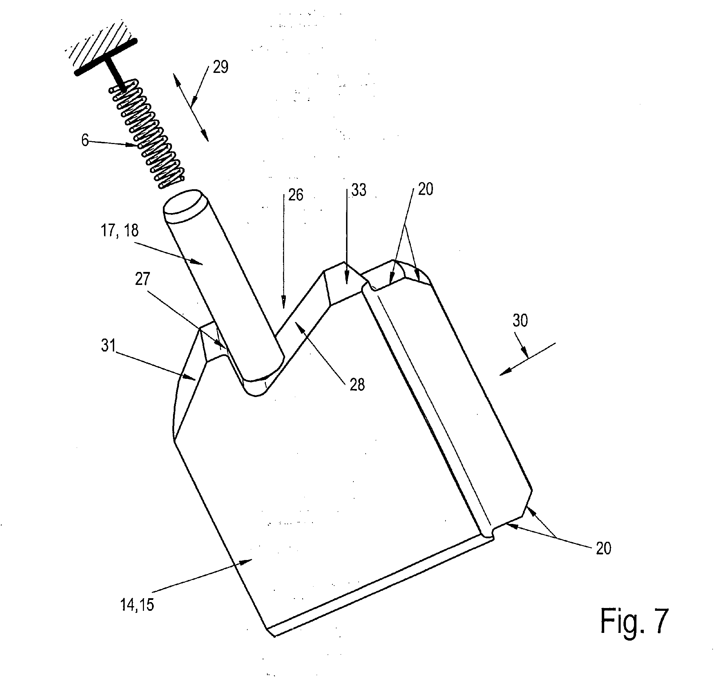

Die Figur 7 zeigt weitere Einzelheiten für die auswechselbare Halterung eines derartigen Schneidmessers 14, 15. Weil die Schneidmesser 14, 15 genau identisch ausgebildet sind, ebenso wie deren Halterung reicht es aus, die auswechselbare Halterung eines einzigen Schneidmessers zu beschreiben, weil das andere Schneidmesser genau identisch ausgebildet ist.

In Figur 7 ist erkennbar, dass ein federbelasteter Wippenbolzen 17, 18 nun federbelastet in den Bereich der Rastausnehmung 26 eingreift und hierbei in seiner Arbeitsstellung an der Anschlagkante 27 anliegt. Das Messer arbeitet deshalb stabil mit seinen Schneidkanten 20 zur Entgratung eines entsprechenden Bohrungsrandes indem der jeweilige Wippenbolzen 17, 18 stabil an der Anschlagkante 27 anliegt.

Soll hingegen das Schneidmesser 14, 15 ausgewechselt werden, dann reicht es aus, einen entsprechenden Druck mit der Hand oder mit einem Hilfswerkzeug in Pfeilrichtung 30 auf das Schneidmesser 14, 15 auszuüben und auf diese Weise gleitet der Wippenbolzen 17, 18 entlang der Keilfläche 28 der Rastausnehmung 26 entlang und kommt im Bereich der Führungsfläche 33 außer Eingriff mit dem Schneidmesser 14, 15. Dieses kann deshalb sehr leicht ausgewechselt werden. Wenn die Schneidmesser 14, 15 eine Entgrataktion durchführen, gleitet der Wippenbolzen 17, 18 stets im Bereich der Keilfläche 28, ohne außer Eingriff mit dieser Keilfläche zu kommen. Erst wenn in Pfeilrichtung 30 eine entsprechende Kraft auf das jeweilige Schneidmesser 14, 15 ausgeübt wird, gelangt der Wippenbolzen 17, 18 außer Eingriff mit der Keilfläche 28 und gelangt in den Bereich der Führungsfläche 33. Das Messer fällt dann sozusagen selbsttätig in Pfeilrichtung 30 aus der Ausnehmung 19 des Entgratwerkzeuges heraus.

Gleiches gilt im Übrigen für das gegenüberliegende Schneidmesser, weil entsprechende Ausführungsform nach Figur 1 bis 3 die Wippe 7 insgesamt federvorgespannt ist und die Wippenbolzen 17, 18 starr auf der Wippe befestigt sind.

Die Figur 7 deutet jedoch auch noch ein anderes Ausführungsbeispiel an, bei dem erkennbar ist, dass die Wippe selbst nicht axial verschiebbar und drehvorgespannt ist, sondern dass vielmehr jeder Wippenbolzen 17, 18 individuell für sich und separat mit Hilfe einer axialen Druckfeder vorgespannt ist, die in Pfeilrichtungen 29 vor- und zurückziehbar ist.

Auf diese Weise kann ebenfalls das Schneidmesser sehr einfach ausgewechselt werden.

Statt also der Anordnung von starren Wippenbolzen auf einer insgesamt axialfedervorgespannten Wippe kann auch eine entsprechende individuelle Lagerung und axiale Verschiebung jedes einzelnen Wippenbolzens 17, 18 vorgesehen werden.

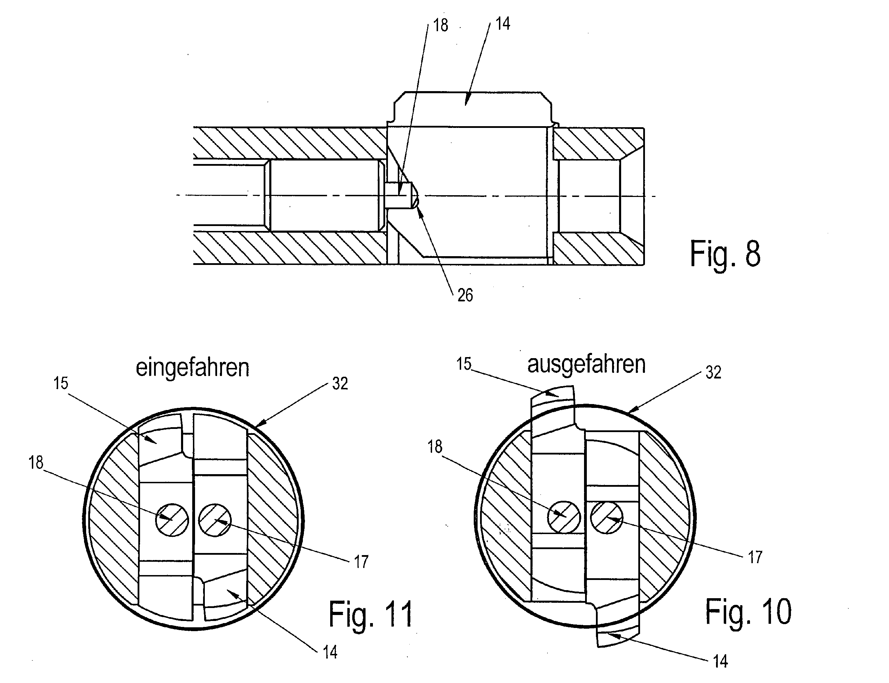

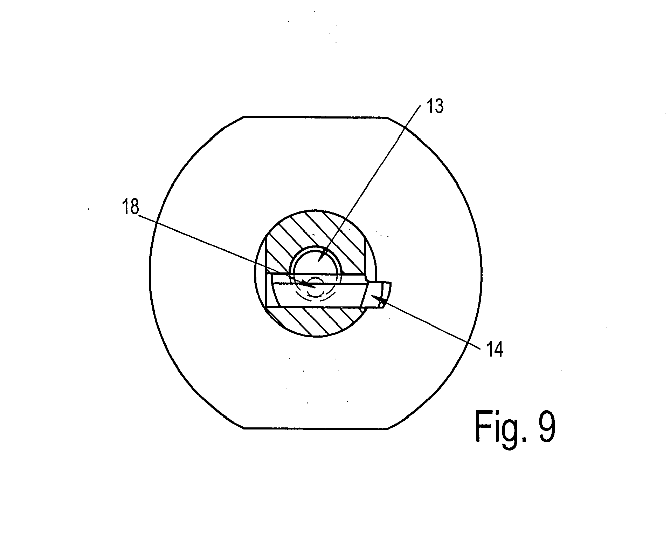

Die Figuren 8 und 9 zeigen, dass anstatt der Verwendung von zwei identischen Schneidmessern 14, 15 auch nur ein einziges Schneidmesser, z.B. ein Schneidmesser 14 verwendet werden kann. Ansonsten gelten für die gleichen Teile die gleichen Erläuterungen.

Auch hier ist wesentlich, dass eine stabile Führung des einzigen Schneidmessers 14 in der Ausnehmung 19 des Entgratwerkzeuges stattfindet.

Soll nun ein neues Messer in die Ausnehmung 19 eingeführt werden, dann dient eine Einführschräge 31 dafür, dass das Messer in Pfeilrichtung 30 einfach in die Ausnehmung eingesetzt werden kann, wodurch der Wippenbolzen 17, 18 oder die gesamte Wippe federbelastet zurückgedrückt wird, sich hierbei axial verschiebt und zwar so lange, bis der Wippenbolzen 17, 18 die Einführschräge 31 überwunden hat und jenseits der Anschlagkante 27 in den Bereich der Rastausnehmung 26 rastend eingreift.

In Figur 10 und 11 ist die gegenseitige Synchronisierung der beiden entgegengesetzt gestellten Messer 14, 15 näher dargestellt. In Figur 10 sind hierbei die beiden Schneidmesser 14, 15 ausgefahren und in Schneidaktion und es ist erkennbar, dass die Wippe 7 mit den Wippenbolzen 17, 18 sich in Pfeilrichtung 21 federbelastet gedreht hat.

Sobald die beiden Schneidmesser 14, 15 in die Bohrung hineinfahren, verdreht sich die Wippe 7 entgegen der eingestellten Federkraft der Druckfeder 6 in Pfeilrichtung 21 und die Schneidmesser 14, 15 werden entgegen der Federkraft in die Werkzeugbohrung 32 eingefahren. Sie entfalten dort keine Schneidaktion oder Entgrataktion mehr.

Vorteil der vorliegenden Erfindung liegt also darin, dass die Schneidmesser 14, 15 besonders einfach auswechselbar sind. Zu diesem Zweck ist es vorgesehen, dass die Wippenbolzen 17, 18 oder die gesamte Wippe 7 in axialer Richtung federvorgespannt in die zugeordnete Rastausnehmung 26 am Grund des jeweiligen Schneidmessers 14, 15 eingreift, so dass das Schneidmesser durch einen einfachen Druck in radialer Richtung ausgetauscht werden können.

### Zeichnungslegende

- 1: Werkzeughalter
- 2: Werkzeugschaft
- 3: Vorderteil
- 4: Längsbohrung
- 5: Distanzbolzen
- 6: Druckfeder
- 7: Wippe
- 8: Wippenschaft
- 9: Vorderteil
- 10: Drehspindel
- 11: Festellschraube
- 12: Nut
- 13: Führungsteil
- 14: Schneidmesser
- 15: Schneidmesser
- 16: Kopfteil
- 17: Wippenbolzen
- 18: Wippenbolzen
- 19: Ausnehmung (Vorderteil 3)
- 20: Schneidkante
- 21: Drehrichtung
- 22: Pfeilrichtung
- 23: Führungsfläche (Messer 14, 15)
- 24: Führungsfläche (von 19)
- 25: Bohrung
- 26: Rastausnehmung
- 27: Anschlagkante
- 28: Keilfläche
- 29: Pfeilrichtung
- 30: Pfeilrichtung
- 31: Einführschräge
- 32: Werkstückbohrung
- 33: Führungsfläche

## Patentansprüche

1. Entgratwerkzeug zum Entgraten von Bohrungen, insbesondere von Einfachbohrungen oder Durchgangsbohrungen, beinhaltend einen Werkzeughalter (1) mit Werkzeugschaft (2) und Vorderteil (3), in dem eine in Querrichtung zur Längsrichtung des Werkzeughalters (1) sich erstreckende Ausnehmung (19) vorhanden ist, in der mindestens ein Schneidmesser (14, 15) vorhanden ist, an deren Unterseite eine Rastausnehmung (26) vorgesehen ist, in welche eine Wippen-Messer-Kupplung (17, 18) eingreift, welcher drehfest mit der Vorderseite einer drehbar im Werkzeugschaft (2) angeordneten Wippe (7) verbunden ist, welche mit einer Feder (6) vorgespannt ist, wodurch das mindestens eine Schneidmesser (14, 15) stets in einer ausgefahrenen Position federbelastet am Werkzeugschaft (2) gehalten wird, **dadurch gekennzeichnet, dass** die Wippen-Messer-Kupplung (17, 18) in Längsrichtung des Werkzeughalters (1) federbelastet in die zugeordnete Rastausnehmung (26) am Grund des mindestens einen Schneidmessers (14, 15) eingreift.

2. Entgratwerkzeug nach Anspruch 1, **dadurch gekennzeichnet, dass** die Wippen-Messer-Kupplung (17, 18) ein Wippenbolzen (17, 18) ist, der fest auf dem Führungsteil (13) der Wippe (7) angeordnet ist und die Wippe (7) in sich federbelastet axial verschiebbar in dem Vorderteil (3) des Werkzeughalters (1) aufgenommen ist.

3. Entgratwerkzeug nach Anspruch 1, **dadurch gekennzeichnet, dass** die Wippen-Messer-Kupplung (17, 18) ein Wippenbolzen (17, 18) ist und die Wippe (7) selbst in axialer Richtung federbelastet vorgespannt ist, so dass der starre Wippenbolzen (17, 18) synchron federvorbelastet in die jeweilige Rastausnehmung (26) am Grund des Schneidmessers (14, 15) eingreift.

4. Entgratwerkzeug nach einem der Ansprüche 1 bis 3, **dadurch gekennzeichnet, dass** die Wippen-Messer-Kupplung (17, 18) ein Wippenbolzen (17, 18) ist, der für sich selbst genommen individuell federvorgespannt ist und in einer zugeordneten Ausnehmung (25) im Führungsteil (13) an der Vorderseite der Wippe (7) axial verschiebbar gelagert ist.

5. Entgratwerkzeug nach Anspruch 1, **dadurch gekennzeichnet, dass** die Wippen-Messer-Kupplung (17, 18) eine axiale elastische Wippenfeder darstellt.

6. Entgratwerkzeug nach Anspruch 5, **dadurch gekennzeichnet, dass** zwei Schneidmesser (14, 15) vorhanden sind und die axiale elastische Wippenfeder durch zwei Druckfedern gebildet ist, die ineinander gewickelt sind, so dass das eine Ende der Wippenfeder in die Rastausnehmung (26) des ersten Schneidmessers (14) und das andere Ende der Wippenfeder in die Rastausnehmung (26) des zweiten Schneidmessers (15) eingreift.

7. Entgratwerkzeug nach einem der Ansprüche 1 bis 6, **dadurch gekennzeichnet, dass** die beiden Schneidmesser (14, 15) im Innenraum des Werkzeugschaftes (2) aneinander anliegen und so aneinander entlang gleitende Führungsflächen (23) bilden, während sie an ihren Außenseiten jeweils in zugeordneten Führungsflächen (24) im Bereich der Ausnehmung (19) an der Vorderseite des Werkzeugschaftes (2) anliegen.

8. Entgratwerkzeug nach einem der Ansprüche 1 bis 7, **dadurch gekennzeichnet, dass** die Schneidmesser (14, 15) zwei diametral einander gegenüberliegende Schneiden (20) bilden, wobei die Schneidmesser (14, 15) sich aufgrund des stabilen Eingriffes die Wippen-Messer-Kupplung (17, 18) stets gegenseitig ausrichten.
